# EUROPEAN PATENT SPECIFICATION

(11) **EP 2 851 288 B1**
(45) Date of publication and mention of the grant of the patent: **05.01.2022**
(21) Application number: 14186064.3
(22) Date of filing: 24.09.2014
(51) Int. Cl.: B64C 9/16, B64C 9/02

(54) **Aerodynamic surface drive mechanism**
Antriebsmechanismus für aerodynamische Klappe
Mécanisme d'entraînement de surface aérodynamique

(30) Priority: 24.09.2013 BR 102013024469
(43) Date of publication of application: 25.03.2015
(73) Proprietor: Embraer, S.A., São José dos Campos, 12227-901- SP (BR)
(72) Inventor: Ferreira, Clóvis Augusto Eca, 12227-901 Sao José dos Campos, SP (BR); Da Silva, Israel, 12227-901 Sao José dos Campos, SP (BR)
(74) Representative: Liesegang, Eva

(56) References cited:
- EP-A1- 0 052 240
- EP-A1- 0 407 159
- DE-A1-102009 002 222
- US-A- 2 218 114
- US-A1- 2002 047 068

## Description

The present invention pertains to mechanisms for driving aerodynamic surfaces, preferably the flaps disposed on the aircraft wings.

### Description of the state of the art

Various types of drive mechanisms and aerodynamic surface support, especially the flaps of aircraft wings, are known in the state of the art.

In this sense, mechanisms of the "simple hinge" kind are used for driving aerodynamic surfaces such as, for instance, the flaps, when they are driven and moved in the perpendicular direction to the trailing edges of the wings (movement *Chordwise).*

When it is desirable to move the flaps in a direction parallel to the flight direction (*Streamwise* movement), other mechanisms are known and used such as, for instance, the "roller track", "combined hinges", "four-bar" mechanism, among others.

However, these already known aerodynamic surface drive mechanisms present flaws, such as the lack of robustness, localized wear and tear and high number of parts in the case of the "roller track" mechanism, impossibility of driving in a Streamwise movement when the "simple hinge" mechanism is used.

The movement of the flaps in a direction parallel to the flight direction (*Streamwise* movement) is often preferred because it diminishes drag compared to the movement of the flaps in a direction perpendicular to the trailing edges of the wings (*Chordwise* movement). However, the sweeping of the aircraft wings, required by the high speed of the modern jets, requires an aerodynamic surface drive mechanism such as flaps that enable the "Fowler" movement when the flap is driven. The "Fowler" movement is characterized by an initial horizontal movement, followed by a rotation.

Thus, further in relation to drive mechanisms already known in the state of the art, document US 4,448,375 refers to a device for trailing flaps formed by a four-bar mechanism with the use of "swing-link" and rotary actuators to perform the "Fowler" movement when the flap is driven. The drawback of using "swing-link" in this movement lies in the increase of loads in the mechanism combination and flap panel when it is slanted on the plane transversal to the aircraft. Additionally, the "swing-link" provides a greater degree of freedom, whereby introducing more leeway in the flap mechanism, adversely affecting the robustness of the combination.

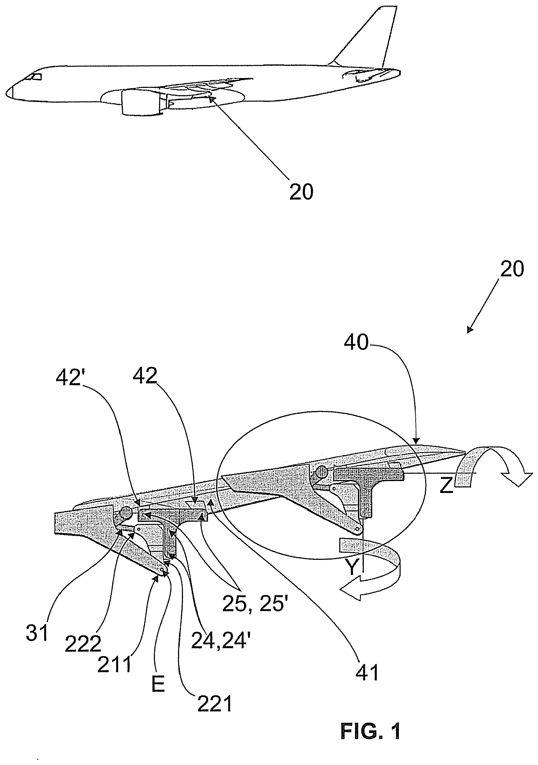

The "*Layout*" document published in Mechanical Design of High Lift Systems for High Aspect Ratio Swept Wings (Rudolph, P. - NASA 1998) illustrated in figure 1 shows a flap drive mechanism that uses, as indicated in the drawing, the principle of the "simple hinge", with a rotary actuator and "swing-link". Although this mechanism enables the flaps to be driven streamwise, this movement is made by way of the rotary actuator 1 fixed to the structure of the aircraft, in this case a wing, a spherical joint 2 disposed on the flap and a rod 3 acting as "swing-link" which is a rod privotable at its ends, between the mechanism and the flap, used to transfer loads exclusively in the direction parallel to the axis formed by these ends.

An actuation system for rotating a control surface mounted on an aircraft airfoil, the control surface being rotatable about a first axis at an acute angle to the longitudinal axis of the aircraft is described in EP 0 052 240 A1.

### Objectives of the invention

The objective of the present invention is to provide a robust mechanism, that is, without problematic elements such as rails or *"swing-link"* for driving aerodynamic surfaces moving them in a direction parallel to the flight direction *(Streamwise* movement).

### Brief description of the invention

The invention provides an assembly comprising an aerodynamic surface and an aerodynamic surface drive mechanism according to claim 1. Embodiments are specified in the dependent claims.

### Summarized description of the drawings

The present invention will next be described in greater detail based on a sample execution represented in the drawings. The drawings show:
Figure 1 - is a side view (in relation to the coordinate system of the aircraft) of an aircraft wing, of the aerodynamic surface flap and of the aerodynamic surface drive mechanism that is the object of this invention;
Figure 2 - is a blown-up detail of figure 1;
Figure 3 - is a top view (in relation to the coordinate system of the aircraft) of the aircraft wing, of the aerodynamic surface flap and of the aerodynamic surface drive mechanism that is the object of this invention;
Figure 4 - is a first rear view (in relation to the coordinate system of the aircraft) with detail of the aerodynamic surface drive mechanism that is the object of this invention, with the flap retracted; and
Figure 5 - is a second rear view with detail of the aerodynamic surface drive mechanism that is the object of this invention, with the flap extended.

### Detailed description of the drawings

According to a preferred embodiment and as can be seen in figure 1, the aerodynamic surface drive mechanism 20 that is the object of this invention is used for moving aerodynamic surfaces 40 such as, for instance, the flaps, in movements parallel to the aircraft flight direction, a movement also known as "streamwise".

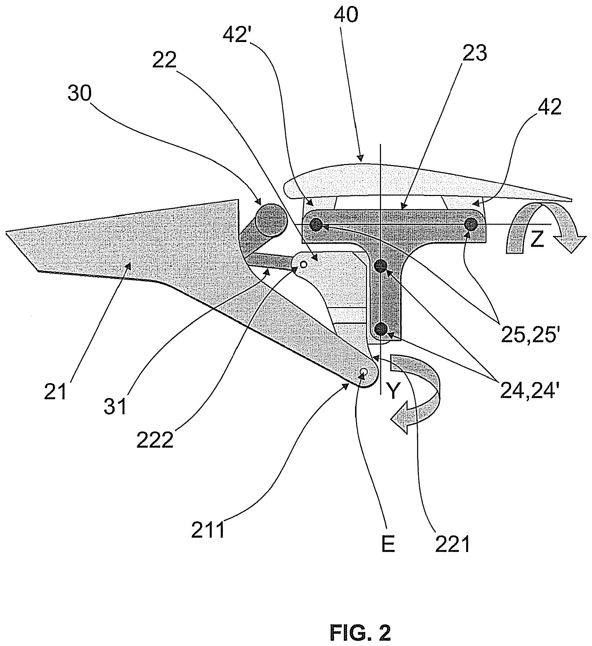

To enable the streamwise movement of aerodynamic surfaces 40, in particular the flaps of aircrafts with swept wings, the aerodynamic surface drive mechanism 20 comprises at least one and preferably two drive combinations 50, 50' associated to the aircraft 60 parallel to each other (figure 2).

As can be seen in figure 1, each drive combination 50, 50' comprises a fixed element 21 associated to a fixed aircraft structure, for instance, a structure of the wing of the aircraft among other possible structures, this fixed element 21 endowed with an articulation 211 that receives an articulation axis E, a first mobile component 22 connected pivotably by a first end 221 to the fixed element 21 by way of the articulation axis and is associated to an actuator 30 at an opposite end 222. The actuator 30 consists of a linear actuator which is fixed to the fixed aircraft structure, on the fixed element 21, and connects to the first mobile component 22 by way of a rod 31.

A second mobile component 23 is rotationally associated to the first mobile component 22 by way of primary swivel joints 24, 24' linearly disposed along a vertical axis Y and rotationally connected to the aerodynamic surface 40 by way of secondary swivel joints 25, 25' linearly disposed along a horizontal axis Z.

This second mobile component 23 is T-shaped, such that the primary swivel joints 24, 24' are linearly disposed on the vertical portion of the second mobile component 23 whereas the secondary swivel joints 25, 25' are linearly disposed on the horizontal portion of the second mobile component 23. The vertical and horizontal portions of this second mobile component 23, as well as the vertical Y and horizontal Z axes are concurrent and perpendicular.

Accordingly, the vertical portion of the second mobile element 23 is associated to the first mobile element 22 by way of the primary swivel joints 24, 24' that enable the rotation of this second mobile element 23 around the Y axis without detaching it from the first mobile element 22 and the horizontal portion of the second mobile element 23 is associated to a lower face 41 of the aerodynamic surface 40, by means of articulation structures 42, 42' fixed to the lower face 41 and in which the secondary swivel joints 25, 25' are housed. This permits a small rotation of the second mobile element 23 around the Z axis, rotations less than 16 degrees.

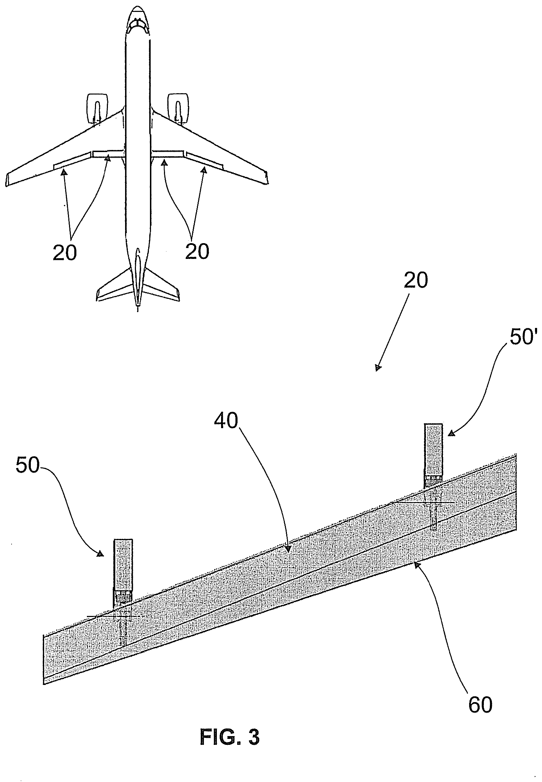

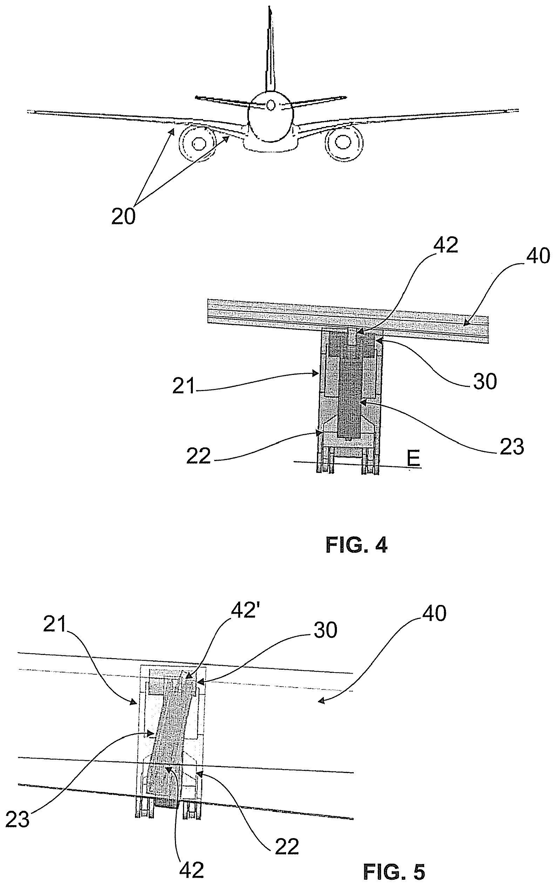

As can be seen in figures 3 and 4, the first mobile component 22 is driven by the actuator 30 and moves rotating around the articulation axis and in contact with the fixed element 21. This first mobile component 22 drags with it the second mobile component 23, which moves in a main rotary movement accompanying the first mobile component 22. The second mobile element 23, in turn, drags with it the aerodynamic surface 40 by the articulation structures 42, 42' fixed to the lower face 41 of this aerodynamic surface 40 moving it linearly.

However, simultaneously to the rotary movement of this second mobile component 23 accompanying the first mobile component 22, the second mobile component 23 sustains rotation around the Y axis by means of the primary swivel joints 24, 24'. Thus, while the second mobile component 23 moves the aerodynamic surface 40 linearly, it also moves this aerodynamic surface 40 rotatively with rotations less than 16 degrees, such that the aerodynamic surface 40 is displaced in a movement parallel to the flight direction.

The primary swivel joints 24, 24' of the first mobile component 22 in conjunction with the secondary swivel joints 25, 25', of the second mobile component 23, enable the flap rotation to be housed following an axis not parallel to the wingspan of the flap (spherical joint effect). These rods are required due to the sweeping of the wing and dispense with the use of rods "swing link" known in the state of the art, resulting in a structurally-robust aerodynamic surface drive mechanism, but lighter on account of the lesser number of parts. This advantage is essential for aviation, the main objective of which is to reduce the weight of the aircraft, and also enables a reduction in industrial costs.

Additionally, the aerodynamic surface drive mechanism that is the object of this invention enables the "streamwise" movement in a swept wing, guaranteeing improved aerodynamic performance of the aircraft.

## Claims

1. An assembly comprising an aerodynamic surface drive mechanism (20) and an aerodynamic surface, the aerodynamic surface drive mechanism (20) containing at least a drive combination (50, 50'), each drive combination (50, 50') comprising
a fixed element (21) associated to a fixed aircraft structure,
a first mobile component (22) connected pivotably by a first end (221) to the fixed element (21) by way of an articulation axis (e) and associated to an actuator (30) by an opposite end (222), and
a second mobile component (23) rotationally associated to the first mobile component (22) by way of primary swivel joints (24, 24') linearly disposed along a vertical axis (Y);
**characterized in that** the second mobile component (23) is further rotationally connected to the aerodynamic surface (40) by way of secondary swivel joints (25, 25') linearly disposed along a horizontal axis (Z), the vertical axis (Y) being perpendicular to the horizontal axis (Z); the first mobile component (22) and the second mobile component (23) being configured to simultaneously move the aerodynamic surface (40) linearly and rotatively by means of the actuator (30) and of the primary swivel joints (24, 24') and secondary swivel joints (25, 25').

2. The assembly as claimed in claim 1, wherein the second mobile component (23) is rotationally connected to a lower face (41) of the aerodynamic surface (40) by means of articulation structures (42, 42') fixed to the lower face (41) and in which the secondary swivel joints (25, 25') are housed.

3. The assembly of claim 2 wherein the second mobile component (23) is configured to drag with it the aerodynamic surface (40) by the articulation structures (42, 42') fixed to the lower face (41) of the aerodynamic surface (40) moving it linearly.

4. The assembly of claim 3 wherein the second mobile component (23) is configured to also move the aerodynamic surface (40) rotatively with a rotation angle less than 16 degrees, such that the aerodynamic surface (40) is displaced in a movement parallel to the flight direction.

5. The assembly as claimed in any of the preceding claims, wherein the first mobile component (22) is configured to be driven by the actuator (30) and rotated around the articulation axis (e) simultaneously to the linear and rotary movement of the second mobile component (23) and the aerodynamic surface (40) by means of the primary swivel joints (24, 24').

6. The assembly as claimed in any of the preceding claims, wherein the drive mechanism (20) is configured to displace the aerodynamic surface (40) in a movement parallel to the flight direction.

7. The assembly as claimed in one of the preceding claims, wherein the aerodynamic surface (40) consists of a flap.

8. The assembly as claimed in one of the preceding claims, comprising two or more drive combinations (50, 50') parallel to each other.

9. The assembly as claimed in one of the preceding claims, wherein the second mobile component (23) is T-shaped such that the primary swivel joints (24, 24') are linearly disposed on a vertical leg portion of the T-shaped second mobile component (23) and the secondary swivel joints (25, 25') are linearly disposed on a horizontal head portion of the T-shaped second mobile component (23).

## Patentansprüche

1. Baugruppe aufweisend einen aerodynamischen Flächenantriebsmechanismus (20) and eine aerodynamische Fläche, wobei der aerodynamische Flächenantriebsmechanismus (20) mindestens eine Antriebskombination (50, 50') aufweist, jede Antriebskombination (50, 50') aufweisend
ein feststehendes Element (21) verbunden mit einer feststehenden Luftfahrzeugstruktur,
eine erste mobile Komponente (22), welche an einem ersten Ende (221) durch eine Gelenkachse (e) schwenkbar mit dem feststehenden Element (21) verbunden ist, und welche an einem entgegengesetzten Ende (222) mit einem Aktuator (30) verbunden ist, und
eine zweite mobile Komponente (23), welche über primäre Gelenkverbindungen (24, 24'), welche entlang einer vertikalen Achse (Y) linear angeordnet sind, drehbar mit der ersten mobilen Komponente (22) verbunden ist;
**dadurch gekennzeichnet, dass** die zweite mobile Komponente (23) ferner über sekundäre Gelenkverbindungen (25, 25'), welche entlang einer horizontalen Achse (Z) linear angeordnet sind, drehbar mit der aerodynamischen Fläche (40) verbunden ist, wobei die vertikale Achse (Y) lotrecht zur horizontalen Achse (Z) verläuft; wobei die erste mobile Komponente (22) und die zweite mobile Komponente (23) dafür eingerichtet sind, die aerodynamische Fläche (40) mittels des Aktuators (30) sowie den ersten Gelenkverbindungen (24, 24') und den zweiten Gelenkverbindungen (25, 25') gleichzeitig linear und rotierend zu bewegen.

2. Baugruppe nach Anspruch 1, wobei die zweite mobile Komponente (23) mittels Gelenkstrukturen (42, 42'), welche an einer Unterseite (41) der aerodynamischen Fläche (40) angebracht sind und in welchen die sekundären Gelenkverbindungen (25, 25') untergebracht sind, drehbar mit der Unterseite (41) verbunden ist.

3. Baugruppe nach Anspruch 2, wobei die zweite mobile Komponente (23) dafür eingerichtet ist, die aerodynamische Fläche (40) durch die Gelenkstrukturen (42, 42'), welche an der Unterseite (41) der aerodynamischen Fläche (40) angebracht sind, mit sich zu ziehen, wodurch diese linear bewegt wird.

4. Baugruppe nach Anspruch 3, wobei die zweite mobile Komponente (23) dafür eingerichtet ist, die aerodynamische Fläche (40) auch rotierend um einem Drehwinkel von weniger als 16 Grad derart zu bewegen, dass die aerodynamische Fläche (40) in einer Bewegung parallel zur Flugrichtung verschoben wird.

5. Baugruppe nach einem der vorstehenden Ansprüche, wobei die erste mobile Komponente (22) dafür eingerichtet ist, durch den Aktuator (30) angetrieben und zugleich mit der linearen und rotierenden Bewegung der zweiten mobilen Komponente (23) und der aerodynamischen Fläche (40) mittels der primären Gelenkverbindungen (24, 24') rund um die Gelenkachse (e) gedreht zu werden.

6. Baugruppe nach einem der vorstehenden Ansprüche, wobei der Antriebsmechanismus (20) dafür eingerichtet ist, die aerodynamische Fläche (40) in einer Bewegung parallel zur Flugrichtung zu verschieben.

7. Baugruppe nach einem der vorstehenden Ansprüche, wobei die aerodynamische Fläche (40) eine Klappe aufweist.

8. Baugruppe nach einem der vorstehenden Ansprüche, aufweisend zwei oder mehr Antriebskombinationen (50, 50'), welche parallel zueinander angeordnet sind.

9. Baugruppe nach einem der vorstehenden Ansprüche, wobei die zweite mobile Komponente (23) T-förmig ist, sodass die primären Gelenkverbindungen (24, 24') linear an einem vertikalen Schenkelabschnitt der T-förmigen zweiten mobilen Komponente (23) angeordnet sind und die sekundären Gelenkverbindungen (25, 25') linear an einem horizontalen Kopfabschnitt der T-förmigen zweiten mobilen Komponente (23) angeordnet sind.

## Revendications

1. Ensemble comprenant un mécanisme d'entraînement de surface aérodynamique (20) et une surface aérodynamique, le mécanisme d'entraînement de surface aérodynamique (20) contenant au moins une combinaison d'entraînement (50, 50'), chaque combinaison d'entraînement (50, 50') comprenant :
un élément fixe (21) associé à une structure fixe d'aéronef,
un premier composant mobile (22) raccordé de manière pivotante par une première extrémité (221) à l'élément fixe (21) au moyen d'un axe d'articulation (e) et associé à un actionneur (30) par une extrémité (222) opposée, et
un second composant mobile (23) associé de manière rotative au premier composant mobile (22) au moyen de joints à rotule principaux (24, 24') disposés de manière linéaire le long d'un axe vertical (Y) ;
**caractérisé en ce que** le second composant mobile (23) est en outre raccordé de manière rotative à la surface aérodynamique (40) au moyen de joints à rotule secondaires (25, 25') disposés de manière linéaire le long d'un axe horizontal (Z), l'axe vertical (Y) étant perpendiculaire à l'axe horizontal (Z) ; le premier composant mobile (22) et le second composant mobile (23) étant configurés pour déplacer simultanément la surface aérodynamique (40) de manière linéaire et rotative au moyen de l'actionneur (30) et des joints à rotule principaux (24, 24') et des joints à rotule secondaires (25, 25').

2. Ensemble selon la revendication 1, dans lequel le second composant mobile (23) est raccordé, de manière rotative, à une face inférieure (41) de la surface aérodynamique (40) au moyen de structures d'articulation (42, 42') fixées sur la face inférieure (41) et dans lequel les joints à rotule secondaires (25, 25') sont logés.

3. Ensemble selon la revendication 2, dans lequel le second composant mobile (23) est configuré pour traîner avec ce dernier la surface aérodynamique (40) par les structures d'articulation (42, 42') fixées sur la face inférieure (41) de la surface aérodynamique (40) la déplaçant de manière linéaire.

4. Ensemble selon la revendication 3, dans lequel le second composant mobile (23) est configuré pour déplacer également la surface aérodynamique (40) de manière rotative avec un angle de rotation inférieur à 16 degrés, de sorte que la surface aérodynamique (40) est déplacée dans un mouvement parallèle à la direction de vol.

5. Ensemble selon l'une quelconque des revendications précédentes, dans lequel le premier composant mobile (22) est configuré pour être entraîné par l'actionneur (30) et entraîné en rotation autour de l'axe d'articulation (e) simultanément au mouvement linéaire et rotatif du second composant mobile (23) et la surface aérodynamique (40) au moyen des joints à rotule principaux (24, 24').

6. Ensemble selon l'une quelconque des revendications précédentes, dans lequel le mécanisme d'entraînement (20) est configuré pour déplacer la surface aérodynamique (40) dans un mouvement parallèle à la direction de vol.

7. Ensemble selon l'une des revendications précédentes, dans lequel la surface aérodynamique (40) se compose d'un volet.

8. Ensemble selon l'une des revendications précédentes, comprenant deux combinaisons d'entraînement (50, 50') ou plus parallèles entre elles.

9. Ensemble selon l'une des revendications précédentes, dans lequel le second composant mobile (23) est en forme de T de sorte que les joints à rotule principaux (24, 24') sont disposés de manière linéaire sur une partie de patte verticale du second composant mobile (23) en forme de T et les joints à rotule secondaires (25, 25') sont disposés de manière linéaire sur une partie de tête horizontale du second composant mobile (23) en forme de T.
